# EUROPÄISCHE PATENTANMELDUNG

(11) **EP 2 434 361 A1**
(43) Veröffentlichungstag der Anmeldung: **28.03.2012**
(21) Anmeldenummer: 10178755.4
(22) Anmeldetag: 23.09.2010
(51) Int. Cl.: G05B 19/418, G05B 17/02

(54) **Simulationssystem und Verfahren**

(71) Anmelder: SIEMENS AKTIENGESELLSCHAFT, 80333 München (DE)
(72) Erfinder: Amthor, Karl-Josef, 80807, München (DE); Stolper, Thilo, 90402, Nürnberg (DE)

(57) **Zusammenfassung**

Ein Simulationssystem (1), weist eine erste Simulationskomponente (3), eine zweite Simulationskomponente (5), einen Datenbus(7), und Beschreibungsinformationen (9) zu Simulationsdaten auf, wobei die Beschreibungsinformationen über den Datenbus (7) übertragbar sind.

## Beschreibung

Simulationen können für verschiedene Automatisierungssysteme durchgeführt werden. Beispiele hierfür sind Werkzeugmaschinen, Produktionsmaschinen (z.B. Verpackungsmaschinen, Druckmaschinen, Farbauftragseinrichtungen bei Druckmaschinen, Pressen, Holzverarbeitungsmaschinen, Glasbearbeitungsmaschinen, usw.) aber auch eine Fabrik. In einer automatisierten Fabrik können unterschiedliche Aspekte einer Anlage bzw. einer Maschine von unterschiedlichen Simulationskomponenten simuliert werden. Zum Beispiel wird mit einer ersten Simulationskomponente ein Materialfluss in der Anlage und mit einer zweiten Simulationskomponente die Kinematik eines Handhabungsautomaten abgebildet. Zur Verbesserung einer Simulation können Simulationskomponenten derart ausgebildet sein, dass diese untereinander Daten austauschen, wobei insbesondere Ergebnisse einzelner Simulationskomponenten auch zusammengefasst werden können oder auch weiterverarbeitet werden können. Eine Zielsetzung der Simulation kann es z.B. sein, eine Interaktion eines Handhabungsautomaten mit einem Prozessgut zu simulieren. Eine weitere Zielsetzung der Simulation kann es z.B. sein, Funktionen einer Werkzeugmaschine zu simulieren.

Simulationssysteme weisen oft mehrere Komponenten auf, zwischen denen insbesondere zyklisch Daten ausgetauscht werden. In komplexen Simulationssystemen werden dabei auch mehrere Softwarekomponenten (Simulationskomponenten) eingesetzt. Auch hier werden Daten über Systemgrenzen der Softwarekomponenten hinweg ausgetauscht.

Für eine effiziente Weiterentwicklung einzelner Softwarekomponenten bzw. auch von Simulationsmodellkomponenten kann es erforderlich sein, dass man Funktionalitäten des Systems oft testen kann. Innerhalb eines in sich geschlossenen Simulationstools ist es relativ einfach möglich zusätzliche Daten zu ersetzen. Dies betrifft Daten, die eine Komponente mit einem Versionsstand mit einem höheren Detaillierungsgrad zusätzlich bräuchte. Liegt ein Simulationssystem vor, welches verschiedene Softwarekomponenten, d.h. Simulationskomponenten aufweist, ergeben sich bei starren Strukturen Probleme, wenn eine Softwarekomponente (Simulationskomponente) beispielsweise verändert oder hinzugefügt wird.

Eine Aufgabe der Erfindung ist es, ein Simulationssystem flexibler zu gestalten.

Eine Lösung der Aufgabe gelingt beispielsweise bei einem Simulationssystem, welches Merkmale der Ansprüche 1 bis 10 aufweist. Ferner kann die Aufgabe bei einem Verfahren nach Anspruch 11 oder 12 gelöst werden.

Ein Datenaustausch zwischen für die Simulation benötigten Softwarekomponenten (Simulationskomponenten) ist durch geeignete Mechanismen flexibel zu gestalten. Konventionelle Datenkonventionen sind aufzubrechen. Mittels flexibler Datenaustauschmechanismen kann der Datenaustausch zwischen Simulationskomponenten derart befördert werden, dass auch bei Änderungen in den Simulationskomponenten (z.B. Versionsupdate) oder bei einem Hinzufügen einer Simulationskomponente das Simulationssystem in einfacher Weise funktionsfähig gehalten werden kann.

Bei einer Variante des Datenaustausches wird das Format der auszutauschenden Daten z.B. in Header-Dateien fest eingetragen. D.h. die einzelnen Komponenten haben keine Möglichkeiten dynamisch zur Laufzeit miteinander zu vereinbaren, welche Daten sie im folgenden Zeitraum miteinander austauschen werden. Als Transportmedien zum Datenaustausch über mehrere Simulationssoftwarekomponentengrenzen hinweg können Mechanismen, wie DDE, Shared Memory, Pipes, TCP/IP usw. zum Einsatz kommen. Entsprechende Mechanismen können jedoch auch bei einer flexibleren Datenstruktur eingesetzt werden. Die Flexibilität kann durch die Verwendung von Beschreibungsinformationen zu Simulationsdaten erhöht werden.

In einer Ausgestaltung weist das Simulationssystem eine erste Simulationskomponente, eine zweite Simulationskomponente, und einen Datenbus (der Datenbus überträgt Simulationsdaten und ist demnach auch als Simulationsdatenbus zu bezeichnen) auf. Ferner gibt es Beschreibungsinformationen zu Simulationsdaten. Die Beschreibungsinformationen sind über den Datenbus übertragbar. Die Beschreibungsinformationen betreffen insbesondere die Simulationsdaten, welche zwischen den Simulationskomponenten ausgetauscht werden. Dies sind insbesondere Simulationsergebnisse, welche zur Weiterverarbeitung, insbesondere für weitere Simulationen in anderen Simulationskomponenten benötigt werden. Simulationskomponenten sind beispielsweise Simulatoren für eine NC-Steuerung oder eine Speicherprogrammierbare Steuerung (SPS). Ferner können Simulationskomponenten auch feingranularer sein, wobei eine Simulationskomponente beispielsweise für folgende Funktionen Simulationsergebnisse bereitstellt: eine Bewegungsachse, Alarme, Nachrichten, Zustandstypen, Bewegungstypen, E/A-Werte, usw.

In einer Ausgestaltung des Systems können Simulationskomponenten auch zumindest eine der folgenden Funktionen aufweisen:
● Auswertung von Schlüsselwörtern;
● Nichtauswertung nicht erwarteter Daten;
● Robustheit Datenverarbeitung in der Simulationskomponenten bei unvollständigen Daten

In einer Ausgestaltung des Simulationssystems sind die Beschreibungsinformationen änderbar. Dies betrifft beispielsweise Änderungen, die durch Änderungen bei den Simulationskomponenten notwendig werden. In einem Simulationssystem werden Daten, insbesondere Simulationsergebnisse und/oder Simulationszwischenergebnisse zwischen den Simulationskomponenten oder auch über einen zentralen Server ausgetauscht. Ändert sich nun beispielsweise durch ein Softwareupdate bei einer Simulationskomponente das Datenformat für die Simulationsergebnisse dieser Simulationskomponente, so ist diese Information den weiteren Simulationskomponenten zugänglich zu machen, welche auf Simulationsergebnissen der upgedateten Komponente aufsetzen.

Um dies einfach zu gestalten kann zum Datenaustausch ein Datenformat zur Laufzeit vereinbart werden. Dabei wird z.B. ein selbstbeschreibendes Dokument (Datensatz mit Beschreibungsinformationen) aufgebaut, welches eine Simulationsdatenstruktur widerspiegelt. In die Simulationsdatenstruktur schreiben die einzelnen Simulationssoftwarekomponenten in einzelne Datenblöcke welche Daten sie auf dem Simulationsdatenbus zyklisch oder azyklisch weitergeben werden.

In einer Ausgestaltung des Simulationssystems weisen Beschreibungsinformationen Datentypen und Datenformate auf.

Die Daten besitzen dabei insbesondere Bezeichnungen, Datentypen und Datenformate. Die Angabe des Datentyps beschreibt den Aufbau der Daten auf dem Simulationsdatenbus. Die Information der Datenformate ist für ein performantes Parsen der Daten erforderlich. Die Bezeichnungen der Daten werden für die Zuordnung der Daten zu Variablen in den Simulationskomponenten verwendet.

Die Beschreibung der Simulationsdatenstruktur wird z.B. am Anfang der Simulation und zu Zeitpunkten erstellt, bei denen es signifikante Änderungen in der Struktur des Simulationsmodells gibt. Diese Zeitpunkte können z.B. über einen Eventmechanismus realisiert werden.

In einer Ausgestaltung des Simulationssystems erfolgt ein Datenaustausch zwischen den Simulationskomponenten in binärer Form. Ein binärer Simulationsdatenbus kann durch ein Shared Memory oder mit einem TCP/IP-Stream realisiert werden.

In einer Ausgestaltung des Simulationssystems sind die Beschreibungsinformationen in verschiedenen Simulationskomponenten gespeichert. Eine Verwaltung der Beschreibungsinformationen kann beispielsweise über eine Zentraleinheit erfolgen. Der Zentraleinheit werden Änderungen im Datenformat zugespielt, wonach die Zentraleinheit die Beschreibungsinformationen ändert und an über den Datenbus angeschlossenen Simulationskomponenten übermittelt. Als Zentraleinheit kann ein Server dienen, welcher auch das Zusammenspiel der verschiedenen Simulationskomponenten weiter koordinieren kann.

In einem Simulationsverfahren können die beschriebenen Simulationssysteme Verwendung finden. Nach einer Änderung eines Softwarestandes einer Simulationskomponente und/oder nach dem Wegfall oder dem Hinzufügen einer Simulationskomponente werden Beschreibungsinformationen geändert. Die Beschreibungsinformationen können in einer selbstbeschreibenden Datenstruktur von Simulationsdaten auch zwischen Simulationssoftwarekomponenten ausgetauscht werden. Dabei kann die Beschreibung der auszutauschenden Daten erst während der Laufzeit, einmal oder mehrfach, generiert werden.

Vorteilhaft kann es sein, wenn mehrere Simulationssoftwarekomponenten additiv die Beschreibung des Datenformates erstellen und die Daten über einen gemeinsamen Simulationsbus austauschen. Werden die Informationen der Datentypen und Datenformate neutral angegeben, so erhöht dies zusätzlich die Flexibilität des Simulationsverfahrens.

Über den Datenbus übertragene Beschreibungsinformationen sind vorteilhaft in zumindest einer weiteren Simulationskomponente oder in einer Zentraleinheit speicherbar. Die Zentraleinheit kann die Beschreibungsinformationen einer Vielzahl von Simulationskomponenten auch strukturieren und nur den Teil der Beschreibungsinformationen an Simulationskomponenten übermitteln, welche für diese notwendig sind.

In einer Ausgestaltung des Simulationssystems können die Beschreibungsinformationen gruppiert sein, bzw. können diese gruppiert werden. Dabei weist beispielsweise ein Datensatz unterschiedliche Gruppen von Beschreibungsinformationen auf. Eine Gruppe bezieht sich beispielsweise auf VNCK Daten. Daten können somit auch identifiziert werden. Ein Datum weist damit beispielsweise eine Gruppeninformation auf. Ein Datum kann beispielsweise folgende Informationen einzeln oder in einer Kombination aufweisen:
● einen Namen;
● eine Gruppenidentifikation;
● eine Typenidentifikation;
● eine Klassenidentifikation; und
● den Wert selbst.

Somit können Daten von Achsen einer Maschine von aktiven oder inaktiven Werkzeugen einer Werkzeugmaschine oder auch Spindeldaten klassifiziert und gruppiert werden. Abhängig von der Eingruppierung können dann beispielsweise Zugriffsrechte auf die Daten vergeben werden.

In einer Ausgestaltung des Simulationssystems weist eine Gruppe zumindest Daten eins der folgenden Typen auf:
● eine Komponentenversionsbeschreibungen,
● eine Achsinformation,
● eine Spindelinformationen,
● Vektoren unterschiedlicher Koordinatensysteme,
● Werkzeugdaten,
● Programmdaten,
● Nachrichten,
● Alarme,
● NC-Variablen,
● SPS-Variablen und/oder
● Bewegungsbeschreibungen.

In einer Ausgestaltung des Simulationssystems kann eine Gruppe mittels eines Engineeringsystems erstellt werden. Damit ist die Datenhaltung innerhalb des Simulationssystems sehr flexibel und kann an unterschiedliche Maschinen und technische System angepasst werden.

In einer Ausgestaltung des Simulationssystems sind Gruppen in Metagruppen aufgeteilt. Es gibt demnach Metagruppierungsebenen für verschiedene Gruppen, wobei damit virtuell abgebildeter Komponenten leichter strukturierbar sind.

In einer Ausgestaltung des Simulationssystems weisen Gruppierungsebenen unterschiedliche Informationen auf wie zumindest eine der folgenden:
eine Instanz einer NC-Steuerung,
eine Instanz einer Speicherprogrammierbaren Steuerung (SPS),
eine Instanz eines Antriebsreglers,
ein Kanal einer NC-Steuerung, und/oder
eine Vielzahl von Kanälen einer NC-Steuerung.

Gemäß des beschriebenen Simulationssystems und des entsprechenden Verfahrens können Simulationen mit Simulationssoftwarekomponenten und Simulationsmodellkomponenten mit unterschiedlichem Entwicklungs- bzw. Detaillierungsgrad durchgeführt werden. Dadurch kann die inkrementelle Entwicklung derartiger Systeme erheblich vereinfacht und beschleunigt werden, da man stets das Simulationssystem testen und ausführen kann. Der Austausch der Daten ist in einem besonderen Maße robust, da in der selbstbeschreibenden Simulationsdatenstruktur neben den Bezeichnungen der Daten auch ihre Datentypen und -formate angegeben werden können. So kann in einer Ausgestaltungsvariante jede Simulationskomponente die Daten auswerten, die für sie relevant sind und besitzt gleichzeitig stets die Kenntnis über die komplette Datenstruktur, auch wenn ihr einzelne Daten von unbekannter Natur und unbekanntem Verwendungszweck sind.

Mit dem beschriebenen Simulationssystem können verschiedenste Ziele erreicht werden, wie z.B.:
● Austausch von Simulationsdaten zwischen Simulationskomponenten unterschiedlichen Versionsstandes;
● Übermittlung eines selbstbeschreibenden Datenformat zusammen mit Simulationsergebnissen;
● Additive Generierung des Datenformats;
● Kenntnis der Struktur der Daten im Simulationsdatenbus durch das gemeinsame Datenformat.

Hierbei ist das Datenformat in den Beschreibungsinformationen enthalten.

Die Erfindung wird nachfolgend beispielhaft anhand von Figuren weiter beschrieben. Dabei zeigt
FIG 1 ein Simulationssystem; und
FIG 2 eine Beschreibungsinformation.

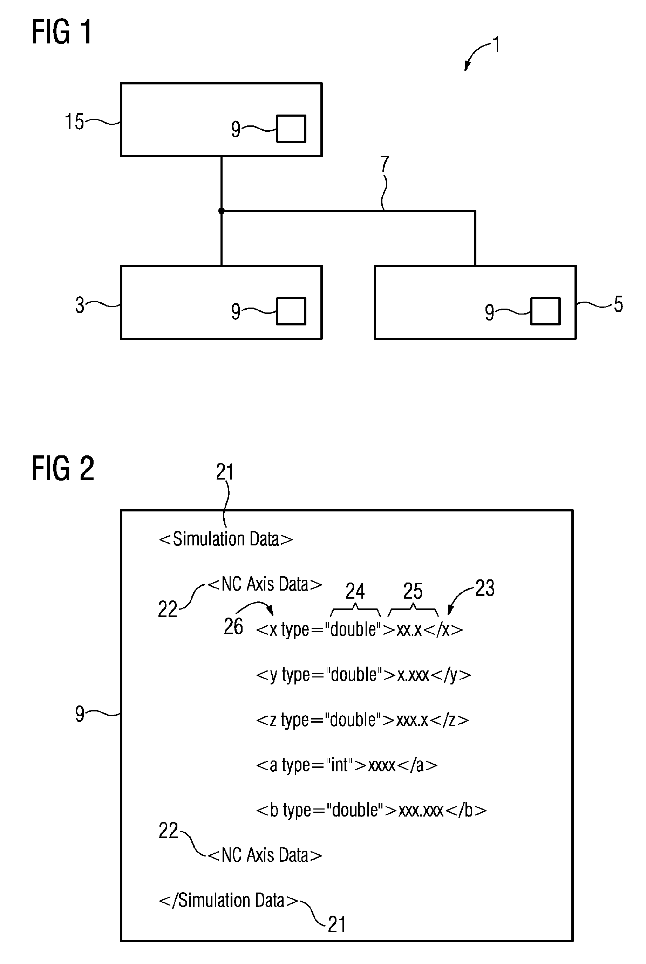

Die Darstellung gemäß FIG 1 zeigt ein Simulationssystem, welches eine erste Simulationskomponente 3, eine zweite Simulationskomponente 5, eine Zentraleinheit 15 und einen Datenbus 7 aufweist. Der Datenbus 7 verbindet die Simulationskomponenten 3, 5 mit der Zentraleinheit 15 und die Simulationskomponenten 3, 5 untereinander. Die Simulationskomponenten 3, 5 sowie die Zentraleinheit 15 weisen Beschreibungsinformationen 9 auf. Die Beschreibungsinformationen 9 beschreiben Daten, welche über den Datenbus 7 übertragen werden und von den Simulationskomponenten erzeugt oder verarbeitet werden.

Mit den Simulationskomponenten 3, 5 können verschiedene Funktionen oder Geräte simuliert werden. Beispiele hierfür sind:
● eine Speicher-Programmierbare-Steuerung (SPS). In einer SPS sind z.B. Funktionen wie Schalt- und Maschinenfunktionen realisiert; Hierzu zählen z.B. Betriebsarten, Werkzeugwechsel, Werkstückwechsel, Verkettungssteuerung, Kühlmittelsteuerung, usw. Durch SPS-Funktionen können auch Überwachungsfunktionen und Sicherheitsfunktionen realisiert sein);
● eine Numerical-Control (NC, bzw. CNC);
● ein NCK (Der NCK hat insbesondere die Funktion einer geometrischen Datenverarbeitung und der Bewegungssteuerung einer Werkzeugmaschine; Komplexe NCs können mehrere vollkommen unabhängig und parallel arbeitende Werkzeugmaschinen bzw. Maschinengruppen steuern; Hierfür können auch verschiedene Kanäle vorgesehen sein; Im NCK kann für alle Kanäle ein NC-Datenmanagement, d.h. Verwalten von NC-Programmen, Maschinendaten, Betriebsdaten erfolgen.)
● eine Antriebseinrichtung (z.B. Wechselrichter, Umrichter, Bewegungssteuerung, usw.);

In einem Simulationssystem 1 nach FIG 1 tauschen die beiden Simulationskomponenten 3 und 5 Daten aus, wobei die eine Komponente 3 beispielsweise eine NC-Steuerung simuliert und die Zweite Komponente 5 empfängt und verarbeitet die Daten von NC-Achswerten. Dabei können Datensätze mit einer Simulationsdatenstruktur ausgetauscht werden, wie eine beispielhaft in Figur 2 gezeigt ist. Dabei handelt es sich um Daten zu einer Achse einer Werkzeugmaschine.

Die Darstellung gemäß FIG 2 zeigt Beschreibungsinformationen betreffend Datenstrukturen. Die Datenstrukturen werden bei auszutauschenden Simulationsdaten zwischen den Simulationskomponenten 3 und 5 verwendet. Wie in FIG 2 dargestellt, ist ein Anfang und ein Ende einer Simulationsdatenstruktur 21 definiert. Innerhalb der Simulationsdatenstruktur 21 befindet sich ein einzelner Datenblock 22. Eine Simulationsdatenstruktur kann eine Vielzahl von Datenblöcken aufweisen, wobei diese Variation in Figur 2 nicht dargestellt ist. Der Datenblock 22 betrifft eine NC Achse. Für diese NC Achse sind verschiedene Bezeichner 26 für Daten definiert x, y, z, a und b. Den bezeichneten Daten 26 sind Datentypen 24 zugeordnet: double und int. Eine Darstellung des Datenformates 25 für einen Wert 23 folgt der Typbezeichnung 25.

Die Übertragung der Daten wird beispielsweise über ein Shared Memory realisiert, in dem sequenziell die Daten in ihren Datentypen 24 und Datenformaten 25 abgelegt sind.

## Patentansprüche

1. Simulationssystem (1), welches
eine erste Simulationskomponente (3),
eine zweite Simulationskomponente (5),
einen Datenbus(7), und
Beschreibungsinformationen (9) zu Simulationsdaten aufweist, wobei die Beschreibungsinformationen über den Datenbus (7) übertragbar sind.

2. Simulationssystem (1) nach Anspruch 1, wobei die Beschreibungsinformationen (9) änderbar sind.

3. Simulationssystem (1) nach Anspruch 1 oder 2, wobei die Beschreibungsinformationen (9) Datentypen (11) und Datenformate (13) aufweisen.

4. Simulationssystem (1) nach einem der Ansprüche 1 bis 3, wobei ein Datenaustausch zwischen den Simulationskomponenten (3,5) binär erfolgt.

5. Simulationssystem (1) nach einem der Ansprüche 1 bis 4, wobei die Beschreibungsinformationen (9) gruppiert sind, wobei insbesondere ein Datensatz unterschiedliche Gruppen von Beschreibungsinformationen aufweist.

6. Simulationssystem (1) nach Anspruch 5, wobei eine Gruppe zumindest Daten eins der folgenden Typen aufweist: eine Komponentenversionsbeschreibungen, eine Achsinformation, eine Spindelinformationen, Vektoren unterschiedlicher Koordinatensysteme, Werkzeugdaten, Programmdaten, Nachrichten, Alarme, NC-Variablen, SPS-Variablen und/oder Bewegungsbeschreibungen.

7. Simulationssystem (1) nach Anspruch 5 oder 6, wobei eine Gruppe mittels eines Engineeringsystems erstellbar ist.

8. Simulationssystem (1) nach einem der Ansprüche 5 bis 7, wobei Gruppen in Metagruppierungsebenen gruppierbar sind, wobei in diesen Daten virtuell abgebildeter Komponenten strukturierbar sind.

9. Simulationssystem (1) nach einem der Ansprüche 5 bis 8, wobei Gruppierungsebenen Instanzen der NC-Steuerung und/oder Instanzen der SPS-Steuerung und/oder Instanzen der Antriebsregler und/oder Kanäle einer NC-Steuerung aufweisen.

10. Simulationssystem (1) nach einem der Ansprüche 1 bis 9, wobei die Beschreibungsinformationen in verschiedenen Simulationskomponenten (3,5) gespeichert sind.

11. Simulationsverfahren bei welchem ein Simulationssystem (1) nach einem der Ansprüche 1 bis 10 verwendet wird, wobei nach einer Änderung eines Softwarestandes einer Simulationskomponente (3,5) und/oder einer Simulationskomponente (3,5) die Beschreibungsinformationen (9) geändert werden.

12. Simulationsverfahren nach Anspruch 11, wonach geänderte Beschreibungsinformationen (9) über den Datenbus (7) übertragen werden und in zumindest einer weiteren Simulationskomponente gespeichert werden.
